# EUROPÄISCHE PATENTSCHRIFT

(11) **EP 0 369 558 B1**
(45) Veröffentlichungstag und Bekanntmachung des Hinweises auf die Patenterteilung: **25.01.1995**
(21) Anmeldenummer: 89250081.0
(22) Anmeldetag: 10.11.1989
(51) Int. Cl.: G02B 6/38, G02B 6/44

(54) **Verfahren zur Fixierung von Lichtwellenleitern in einem Steckergehäuse**
Device for fixing light wave guides in a connector housing
Dispositif de fixage des guides d'ondes lumineuses dans un boîtier de connecteur

(30) Priorität: 14.11.1988 DE 3838974
(43) Veröffentlichungstag der Anmeldung: 23.05.1990
(73) Patentinhaber: SIEMENS AKTIENGESELLSCHAFT, 80333 München (DE)
(72) Erfinder: Lüttgert, Karl-Ernst, Dr.-Ing., D-1000 Berlin 41 (DE); Schulz, Klaus, Dr.-Ing., D-1000 Berlin 49 (DE)

(56) Entgegenhaltungen:
- EP-A- 0 137 665
- DE-A- 3 712 338
- DE-U- 8 622 121
- FR-A- 2 510 269

## Beschreibung

Die Erfindung bezieht sich auf ein Verfahren zum Fixieren eines Kabels mit einer äußeren Hülle, zugfesten Elementen und mindestens einer Lichtwellenleiter-Ader in einem Steckergehäuse mit einer Durchtrittsöffnung für die Ader(n), bei dem ein Fixierstück mit einem Kanal oder Kanälen zum Durchführen der Lichtwellenleiter-Ader(n) weitgehend spannungsfrei in die Durchtrittsöffnung eingesetzt und dort mit Hilfe eines Stopfens arretiert wird.

Dabei wird von einer Vorrichtung ausgegangen, die in der deutschen Gebrauchsmusterschrift 86 22 121 beschrieben wird. Diese Vorrichtung genügt nicht in jedem Falle allen an eine solche Vorrichtung zu stellenden Anforderungen. Ganz wesentlich ist auch das Verfahren zum Einbringen und Fixieren mindestens einer LWL-Ader unabhängig vom Kabelaufbau in einer solchen Vorrichtung.

Aufgabe der Erfindung ist es daher, ein Verfahren für den zuvor erwähnten Zweck anzugeben, das eine sichere Fixierung der LWL-Adern in einem Steckergehäuse garantiert.

Die erfindungsgemäße Lösung dieser Aufgabe sieht vor, daß
a) die zugfesten Elemente des Kabels mit ihren gehäuseseitigen Enden an dem Steckergehäuse befestigt werden, während das gesamte Kabel einer von dem Steckergehäuse weggerichteten Zugkraft unterworfen wird,
b) in an sich bekannter Weise die Lichtwellenleiter-Ader(n) in das Fixierstück eingeführt und mittels Stopfen arretiert wird (werden) und
c) Klebstoff in die Zwischenräume zwischen dem Kanal oder den Kanälen des Fixierstücks und der oder den darin arretierten Lichtwellenleiter-Ader eingebracht wird.

Auf diese Weise wird zunächst Sorge dafür getragen, daß eine eventuell im Kabel vorhandene Überlänge der die Zugkraft im Kabel aufnehmenden Elemente beseitigt und die den eigentlichen Lichtwellenleiter aufnehmende Hülle (buffer) vorteilhaft erst in den Kanälen des Fixierstückes mit diesem kraft- und/oder formschlüssig verbunden wird. Die Arretierung zwischen Fixierstück und seiner Durchtrittsöffnung erfolgt dabei einerseits durch Eindrücken des Stopfens und andererseits durch Einbringen von Klebstoff in die beim Eindrücken des Stopfens durch Verformung entstehende Zwischenräume zwischen den Kanälen des Fixierstücks und den darin arretierten Lichtwellenleiter-Adern.

Eine vorteilhafte Ausführungsform der Erfindung sieht vor, daß das Unterwerfen des Lichtwellenleiter-Kabels einer Zugkraft im Endbereich des Kabels erfolgt und die Zugkraft dabei mit Hilfe einer Winde aufgebracht wird. Selbstverständlich wird man dafür Sorge tragen, daß die Winde einen unkritischen Durchmesser aufweist. Außerdem ermöglicht die Winde die Anwendung eines ausreichend großen Umschlingungswinkels, so daß die gewünschte Zugkraft einwandfrei auf das Kabel aufgebracht werden kann.

Eine weitere bevorzugte Ausführungsform besteht darin, daß zum Arretieren der Lichtwellenleiter-Ader im Fixierstück des Steckergehäuses ein konisch geformter Stopfen verwendet wird. Mit Hilfe dieses konischen Stopfens ist eine Anpassung der zu bewehrenden Preßkräfte bei unterschiedlichen Durchmessern der LWL-Adern ohne jede Schwierigkeit möglich.

Die Erfindung wird anhand des nachstehend beschriebenen und in der Zeichnung dargestellten Ausführungsbeispieles im einzelnen erläutert. In der Zeichnung zeigt:
- Fig. 1: einen schematischen Schnitt durch ein Steckergehäuse mit einem zweiadrigen Lichtwellenleiter-Kabel,
- Fig. 2: einen Längsschnitt durch ein Lichtwellenleiter-Kabel zur Erläuterung seines Aufbaues,
- Fig. 3: eine schematische Darstellung eines Winschvorganges,
- Fig. 4: einen schematischen Schnitt einer Arretierbuchse und
- Fig. 5: einen schematischen schnitt eines Fixierstückes.

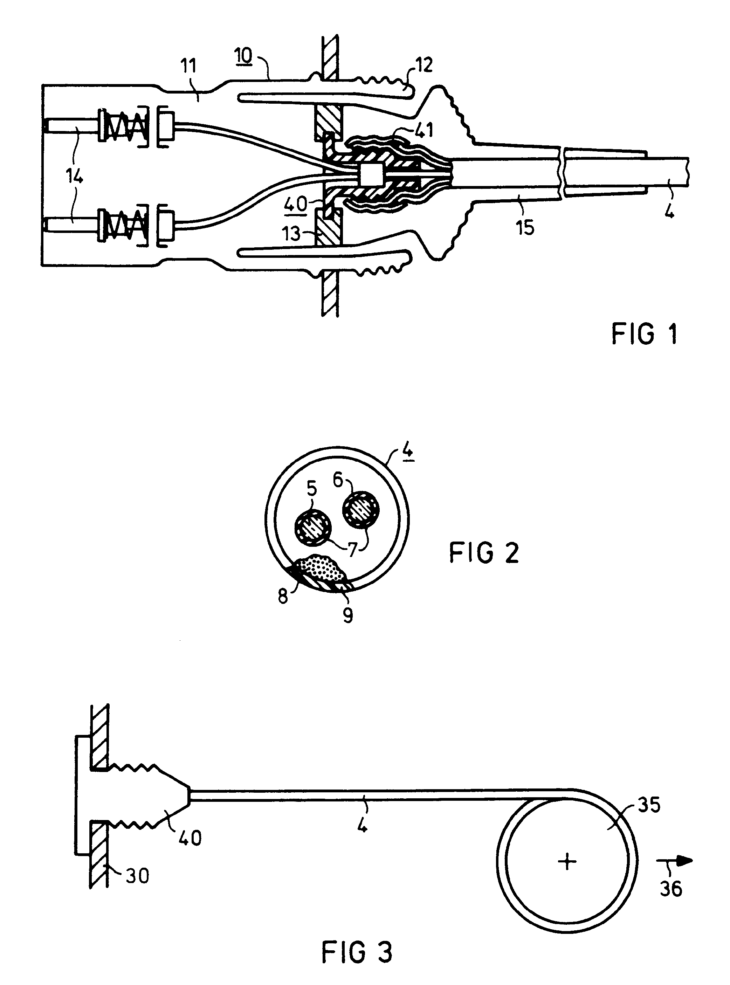

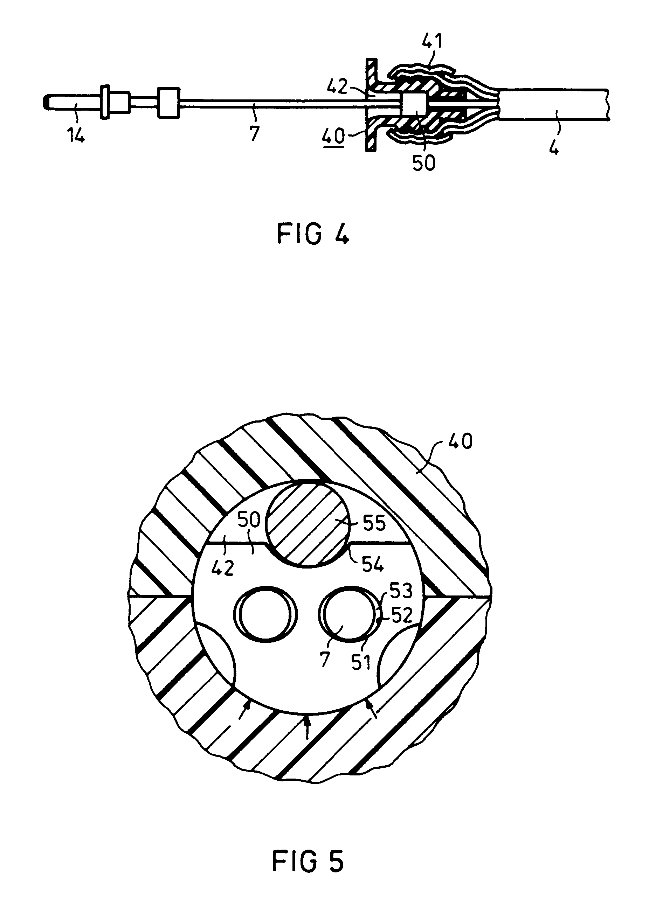

In Fig. 1 ist schematisch eine Steckvorrichtung 10 dargestellt, die im wesentlichen aus einem Gehäuse 11 mit federnden Rastzungen 12 besteht, in dem an einer festen Querwand 13 eine Arretierbuchse 40 (Fig. 4) befestigt ist. Die die einzelnen Lichtwellenleiter-Adern 7 aufnehmenden federnden Stecker sind mit 14 bezeichnet. Das LWL-Kabel 4 wird über eine lange Tülle 15 in das Gehäuse eingeführt. Die lange, elastisch ausgebildete Tülle soll einen zu kleinen Biegeradius des LWL-Kabels verhindern.

An der Arretierbuchse sind die zugfesten Elemente 8 (Fig. 2), die im Ausführungsbeispiel aus Aramidfiber (bekannt unter dem Warenzeichen KEVLAR) bestehen, und die äußere Hülle 9 (cover) mit einer Klemmuffe 41 fixiert, während die Lichtwellenleiter-Adern 7 zunächst lose durch die Arretierbuchse 40 hindurchgeführt sind.

Der Aufbau des im Ausführungsbeispiel dargestellten LWL-Kabels 4 ist schematisch in Figur 2 in einem Querschnitt dargestellt. Die eigentliche lichtleitende Faser 5 ist von einer als coating bezeichneten Isolierung 6 umgeben. Es wird ein Lichtwellenleiter-Kabel 4 mit zwei Lichtwellenleitern 5 verwendet. Die beiden Lichtwellenleiter-Adern 7 sind von KEVLAR-Fäden 8 umgeben, die wiederum von einer äußeren Hülle 9 (cover) eingeschlossen sind.

In Fig. 3 ist der erste für die Erfindung wesentliche Schritt, der Winschvorgang, schematisch dargestellt. Die Figur zeigt die an einer Querwand 30 festgelegte Arretierbuchse 40 mit der mit Hilfe der Klemmuffe 41 daran fixierten äußeren Hülle 9 und der KEVLAR-Fäden 8. In einer gewissen Entfernung, die in der Größenordnung der Spannweite eines Menschen liegt, ist das LWL-Kabel 4 mehrfach um eine Winde 35 herumgeführt, an der eine bestimmte Zugkraft (Pfeil 36) angreift. Bei diesem Vorgang wird eine im LWL-Kabel 4 durch vorhergehendes Stauchen eventuell vorhandene Überlänge der zugfesten Elemente, d. h. der KEVLAR-Fäden 8, beseitigt, so daß für spätere Fälle die zugfesten Elemente denjenigen Teil des Kabels bilden, der auch wirklich die auftretenden Zugkräfte aufnehmen kann.

Die Arretierbuchse 40 ist in Figur 4 in ihren Einzelheiten dargestellt. Neben der äußeren Klemmuffe 41 weist sie eine relativ große Bohrung 42 auf, die so bemessen ist, daß sie ein Fixierstück 50 aufnehmen kann, das in Fig. 5 in einem schematisch gehaltenen Schnitt, eingesetzt in die Bohrung 42 der Arretierbuchse 40, dargestellt ist, in dem Kanäle 51 zur Durchführung der LWL-Adern 7 vorgesehen sind.

Das Fixierstück 50 ist mit einer Ausnehmung 54 versehen, so daß zwischen der Wandung der Bohrung 42 und der Ausnehmung 52 ein konischer Stopfen 55 zum Verpressen der Lichtwellenleiter 7 in die Kanäle 51 eingeführt werden kann. Bei diesem Preßvorgang werden die Kanäle 51 des aus elastischem Material bestehenden Fixierstücks 50 ein wenig verformt, so daß zwischen den eingepreßten Lichtwellenleiter-Adern 7 und der Kanalwandung 52 etwa sichelförmige Hohlräume 53 entstehen, in die dann gemäß einem weiteren wichtigen Schritt der Erfindung schnell abbindender Klebstoff eingefüllt wird.

## Patentansprüche

1. Verfahren zum Fixieren eines Kabels (4) mit einer äußeren Hülle (9), zugfesten Elementen (8) und mindestens einer Lichtwellenleiter-Ader (7) in einem Steckergehäuse (11) mit einer Durchtrittsöffnung für die Ader(n) (7),
- bei dem ein Fixierstück (50) mit einem Kanal oder Kanälen (51) zum Durchführen der Lichtwellenleiter-Ader(n) (7) weitgehend spannungsfrei in die Durchtrittsöffnung eingesetzt und dort mit Hilfe eines Stopfens arretiert wird,
**dadurch gekennzeichnet**, daß
a) die zugfesten Elemente (8) des Kabels (4) mit ihren gehäuseseitigen Enden an dem Steckergehäuse (11) befestigt werden, während das gesamte Kabel (4) einer von dem Steckergehäuse (11) weggerichteten Zugkraft unterworfen wird,
b) in an sich bekannter Weise die Lichtwellenleiter-Ader(n) (7) in das Fixierstück (50) eingeführt und mittels des Stopfens (55) arretiert wird (werden) und
c) Klebstoff in die Zwischenräume zwischen dem Kanal oder den Kanälen (51) des Fixierstücks (50) und der oder den darin arretierten Lichtwellenleiter-Ader(n) (7) eingebracht wird.

2. Verfahren nach Anspruch 1,
**dadurch gekennzeichnet**, daß der Endbereich des Kabels (4) der Zugkraft unterworfen wird und daß die Zugkraft mit Hilfe einer Winde (35) aufgebracht wird.

3. Verfahren nach Anspruch 1,
**dadurch gekennzeichnet**, daß zum Arretieren der LWL-Ader (7) im Fixierstück (50) des Steckergehäuses (11) ein konischer Stopfen (55) verwendet wird.

## Claims

1. A process for securing a cable (4) with an external sleeve (9), high-tensile elements (8) and at least one fibre-optic cable core (7) in a plug housing (11) with a gland for the core(s) (7), in which a locking piece (50) with a channel or channels (51) for leading through fibre-optic cable core(s) (7) is inserted into the gland more or less free of stress and is locked in that position with the aid of a stopper, characterised in that
a) the ends of the high-tensile elements (8) of the cable (4) are attached at the housing end to the plug housing (11) whilst the entire cable (4) is subjected to a tensile force directed away from the plug housing (11),
b) the fibre-optic cable core(s) (7) is (are) introduced into the locking piece (50) and locked by means of the stopper (55) in the known manner, and
c) adhesive is introduced into the spaces between the channel or channels (51) of the locking piece (50) and the fibre-optic cable core or cores (7) locked therein.

2. Process according to Claim 1, characterised in that the end region of the cable (4) is subjected to the tensile force and that the tensile force is applied with the aid of a capstan (35).

3. Process according to Claim 1, characterised in that a conical stopper (55) is used to lock the fibre-optic cable core (7) into the locking piece (50) of the plug housing (11).

## Revendications

1. Procédé pour fixer un câble (4) comportant une gaine extérieure (9), des éléments (8) résistant à la traction et au moins un conducteur formant guide d'ondes lumineuses (7), dans un boîtier de connecteur (11) comportant une ouverture de passage pour le ou les conducteurs (7), - selon lequel on introduit, dans une large mesure sans contrainte, dans l'ouverture de passage, une pièce de fixation (50) comportant un ou des canaux (51) pour le passage du ou des conducteurs formant guides d'ondes lumineuses (7) et qu'on le bloque dans cette ouverture au moyen d'un bouchon, caractérisé par le fait que
a) on fixe les éléments (8), résistants à la traction, du câble (4) par leurs extrémités situées côté boîtier sur le boîtier de connecteur (11), tandis qu'on soumet l'ensemble du câble (4) à une force de traction qui s'écarte du boîtier de connecteur (11),
b) d'une manière connue en soi, on introduit le ou les conducteurs formant guides d'ondes lumineuses (7) dans la pièce de fixation (50) et on les bloque au moyen d'un bouchon (55), et
c) on introduit de la colle dans les espaces intercalaires entre le ou les canaux (51) de la pièce de fixation (50) et le ou les conducteurs formant guides d'ondes lumineuses (7) bloqués dans cette pièce.

2. Procédé suivant la revendication 1, caractérisé par le fait qu'on soumet la partie d'extrémité du câble (4) à la force de traction et qu'on applique la force de traction à l'aide d'un treuil (35).

3. Procédé suivant la revendication 1, caractérisé par le fait qu'on utilise un bouchon conique (55) pour bloquer les conducteurs formant guides d'ondes lumineuses (7) dans la pièce de fixation (50) du boîtier de connecteur (11).
